# EUROPEAN PATENT APPLICATION

(11) **EP 2 150 059 A1**
(43) Date of publication of application: **03.02.2010**
(21) Application number: 08013737.5
(22) Date of filing: 31.07.2008
(51) Int. Cl.: H04N 7/24

(54) **A method and associated device for generating video**

(71) Applicant: Vodtec BVBA, 9050 Gent (Ledeberg) (BE)
(72) Inventor: De Neve, Philippe, 9000 Gent (BE); Van Quickenborne, Christophe, 1730 Asse (BE); Van Quickenborne, Frederic, 9000 Gent (BE)
(74) Representative: BiiP cvba

(57) **Abstract**

The present invention relates to a method for generating a video specific for a terminal and/or user. The method comprises the steps of obtaining payload-dependent header information for the video and subsequently generating a payload of the video.

## Description

### Field of the Invention

The present invention generally relates to generating video and in particular to generating video specific for a user and/or terminal.

The video is specific for a terminal and/or user in that it may be adapted to the requirements of a user, interests of a user or user profile. In addition or as an alternative thereto, the video is specific for the terminal whereon the video is decoded or presented to one or more persons. The result is that each video can be used on the terminal and that the experience for a user can be enhanced by personalizing the video for that user or one or more groups of users or by adding advertisements to the video, for instance to provide an income to the service provider.

### Background of the Invention

Various video formats, either formats for streaming, coding, transmitting or for storage on data carriers such as CD's, DVD's, hard discs, etc. are made up out of two types of data. A first type is typically called the payload and contains useful information that is displayed to a viewer of the video. Payload data typically consist of a sequence of images or frames which can be displayed one after the other, information detailing the changes from a previous image or frame to the next, etc. In general the payload is the largest part of the video and is what a user or viewer can experience. The payload may be limited to video or may also include one or more audio tracks. The second type of data is typically called header and contains information which is used by the decoder for the playback of the video. The video header may for instance include indications of the location and/or length of the various frames in the payload, characteristics of the video such as resolution, bit-rate, codecs used in the video etc.

When a user wants to experience a video, he uses a device and/or a piece of software (the terminal) for decoding and playback of the video. Such devices are able to retrieve the header and process the information therein in order to decode the payload of the video and to thus ensure the playback of the video. The present invention is in particular related to video generation techniques, i.e. the generation of either files or streams which are encoded in variable length frames with headers. The differences between streaming techniques and techniques which rely on complete or partial video files or stored video files are not relevant for the understanding and application of the present invention.

When video is generated, the header can only be established once the payload itself has been generated. This is a consequence of the fact that the header contains information on the position of frames in the payload and other information which is only known once the payload has been generated. When generating a video, certain parameters such as screen resolution, codecs, etc. may be set as constraints for the encoding process. These constraints then result in certain values for other parameters. For instance, a video of a certain resolution which is encoded according to a particular codec will have a certain bit-rate. The same video with a different resolution and the same codec will have a different bit-rate. In such cases, the encoding occurs under the constraints of the codec and certain information required to produce the video header, such as the frame lengths and frame locations, becomes known after the encoding.

This does not pose any problems in traditional applications such as television on-demand and video on-demand solutions wherein a user requests a particular television program or video via his television set and a set-top box from a central server provided by the operator of the on-demand system. For instance, various television broadcasters provide their content to various digital television and on-demand service providers. The on-demand providers can store the content in their central repository and distribute the content to each user requesting a particular piece of content via existing distribution channels such as the Internet. Such applications do not suffer from the fact that headers for video can only be generated once the payload has been generated because the on-demand service providers have the video with header and payload available before they are requested. Because such television based systems rely on video in a particular format which is predefined for all television based applications, each television show or video which is offered via an on-demand service is in the same format and each television set or set-top box is able to process that format. As a consequence, all of the video material only needs to be stored once and will have header and payload material available whenever it is requested by a user.

The main problem underlying the present invention arises when the video is not only delivered to a user or presented to a user upon request but when the generation of the video also occurs upon request. This is necessary when the range of formats or variations in which each video needs to be offered to users is too broad for all variations of each video to be stored, but rather to be generated at the time of the request from a user. Generation of the payload may take some time to complete and as the header can only be generated once the payload is available, a user or viewer has to wait for the completion of both generation processes before the video can be experienced. In cases where transmission is also required, for instance from a server to a client, the transmission has to wait for the generation to complete before it can be initiated which delays the decoding or playback of the video even more. This situation is even worse in a scenario where the header is transmitted after the payload because the decoding and playback process then are delayed until receipt of the header, requiring the full transmission to be completed before playback can commence.

An example situation wherein significant problems resolved by the current invention may arise is a video on-demand service for users with client devices or terminals that have various specifications such as mobile telephones, personal digital assistants, laptops, etc. The different specifications include different screen resolutions, screen sizes, supported codecs, available bandwidth for retrieving video, etc. When offering a single video to terminals with different specifications, certain terminals may experience problems in presenting the video or in presenting the video optimally. For instance, when a codec is used for a video which is not supported by the client terminal, the terminal will be unable to present the video. However, if the video is based on a codec which is supported by the terminal but has a resolution different from the terminal's screen resolution, the terminal may be able to present the video but only after rescaling the video or with an output which is not optimal for the client and which may lead to a reduced experience for the user. It is thus beneficial to provide video specifically generated for a particular terminal. This way the video is adapted to the specifications of the terminal by taking into account parameters such as available bandwidth, resolution, buffer space, supported codecs, etc. More advanced scenarios may even include the addition of advertisements or personalized information to each video specific for a particular user or one or more groups of users.

Users who request a video expect or desire that they are able to experience the video as soon as they have requested it or with a minor delay. In the prior art scenario where all videos are stored in all possible formats or for all existing terminals on a central server, it is possible to deliver the video in optimal format to a user upon request. However due to the steady increase in diversity of terminals which can be used for requesting video and experiencing video, the central server would need to store a large amount of variations of the same video, each having different specifications. For instance, if an on-demand service provider serves users with mobile telephones, he may end up with a different video for each type of mobile phone wherein each version differs from the others in resolution. In addition, the various terminals may include different codecs resulting in even more variations of the same video to be stored on the central server. Furthermore, videos that include personalized advertisements or other type of information, would multiply the need for storage even further.

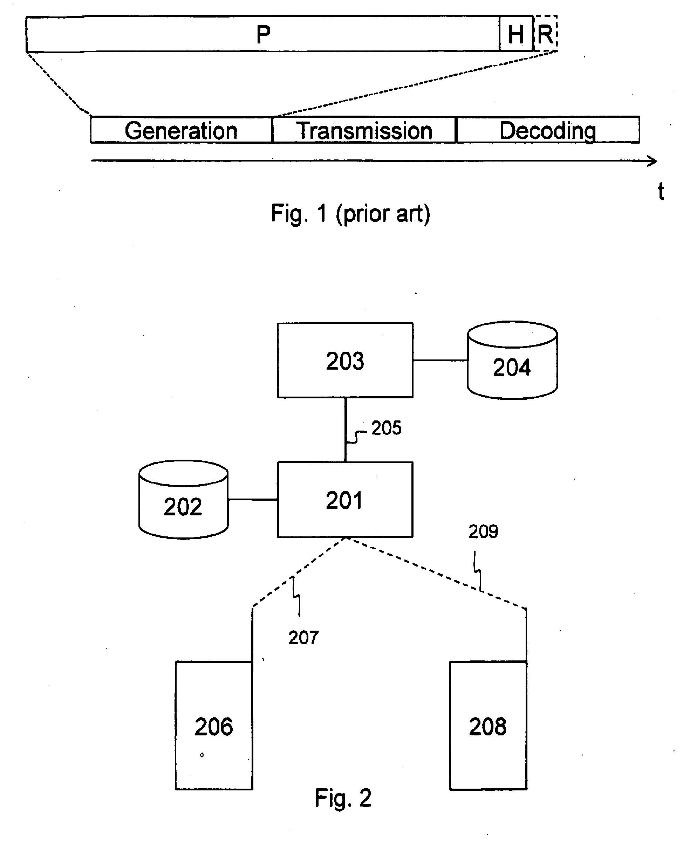

The generation of a terminal and/or user-specific version of a video upon request reduces the storage requirements significantly. However, based on the way video encoding works today, this also increases delays significantly. Video encoding continues to strive to compress data as much as possible, while generating video quality that is as high as possible. As described above, these encoding algorithms require a header to allow a device to correctly decode the payload information of the video to ensure high-quality playback. As encoding algorithms optimize their compression by using similarities between frames in a video, the length of frames (or their bit-rates) will depend on the amount of movement between frames and on other types of similarities between frames within the video. This makes the bit-rate or length of each frame unpredictable. As a playback device needs to know when to start showing which frame, these encoding algorithms also generate a header. This header amongst others (see above) includes references to each frame and/or its respective length or bit-rate. Given the unpredictability of the location and the length of each frame which depends on the actual content of the video, for instance a lot of movement in the content will generate other bit-rates for individual frames than in the case where no movement occurs, the header is generated after the payload itself has been generated and thus the length and location of each of the frames is know. This is depicted in figure 1. This figure illustrates how video encoding works and what that entails for the delays experienced by users. During the generation process, first the payload P itself is generated, after which the header H is generated. As a device wanting to play back the video needs to have the header H to be able to properly process the payload P, the header H will either have to precede the payload P, or a reference R to the header H will need to be added in front of the payload P. This requires that, in terms of structure of the video file, either the reference R to the header H or the header H itself will need to precede the actual payload. The way this is done is be either (a) generating the payload P, then the header H and by putting the header H in front of the payload P before finalising the video; or by (b) putting an empty reference R to a header H, generating the payload P, then generating the header H, putting the header H after the actual payload P and then adjusting the reference R at the beginning of the video to point to the exact starting location of the header H in the video. In both scenarios, transmission of the video can only start after the encoding or generation is completed. Indeed, as the encoding requires to either add the header at the beginning of the video or adjust the reference thereto at the beginning of the video, the transmission of the video cannot start until after the beginning of the video is finalized, or thus after the encoding or generation is concluded.

In addition, in the case where a reference to the header, succeeding the actual payload, the decoding of the video and thus the playback thereof, can only start when the full video, including its actual header at the end of the video has been transmitted. This creates an additional delay for the user. Not only can transmission only start upon completion of the encoding, playback can only start upon the completion of the transmission.

In summary, offering video to various types of client terminals requires a large amount of storage space or introduces the need for on-demand generation of video with long delays between the request and the playback of the video.

The present invention aims to provide a method for generating video in such a way that the required storage space is reduced significantly. Another objective of the present invention is to reduce the delay between request and decoding or playback of video. Another objective of the present invention is to provide a method for video generation which is able to operate without modifications to existing terminals.

### Summary of the Invention

The objectives of the present invention are overcome by a method for generating a video specific for a terminal and/or user,
characterized in that the method comprises the steps of:
- obtaining payload-dependent header information for at least part of the video;
- subsequently generating a payload of part of the video.
Indeed, by obtaining payload-dependent header information for the video before the payload itself is generated, it is possible to decrease the delays between generation and playback. In addition, as video is only generated upon request, there is no need to store all possible variations of the video and thus the storage requirements are reduced.

By generating the header or the reference thereto, either or both referred to in the remainder of this document as the "payload-dependent header information", before the payload itself is generated, the transmission of the video can already start even if the payload itself has not yet been fully generated. As such, video generation and transmission can be performed in parallel, thereby reducing the delay for the user. As the video is still offered in a structure compliant to the encoding algorithm, existing terminals will be able to process the video properly and ensure an optimal playback.

In addition to allowing parallel video generation and transmission, also the video decoding or playback can be done in parallel, thereby further reducing the delay for users. This can be achieved by generating the header (and not a reference to the header) and putting it ahead of the actual payload. This way, the receiving device can already start processing the header as well as start playback of the already available elements of the payload to which the header refers.

It is noticed that the payload-dependent header information is dependent on the payload in a similar fashion as a header which is generated when the payload is available. However, the payload-dependent header information does not have to be a header usable for decoding the payload as will be explained below.

It is further noticed that the payload of the video generated according to the present invention is a payload as it is generally known and comprises compressed or encoded frames, pictures or other information which has to be processed by a decoder or playback device in order to present the video itself to a user or persons. In one example, the payload-dependent header information may be a H.264 header and the payload may be video encoded according to the H.264 specifications. In other examples, the header and payload may be based on other video encoding schemes.

In essence, the present invention relies on obtaining payload-dependent header information before the payload itself is generated. As a result thereof, payload need not be stored in various formats, and transmission and decoding processes can be accelerated. For instance, a service provider may offer on-demand video for users of mobile telephones, whereby the video is optimized for each specific mobile telephone in terms of resolution, encodings, audio, etc. The service provider may obtain the payload-dependent header information which is relevant for a particular terminal and then generate the corresponding payload. The result is that each possible variation of the payload does not have to be stored by the service provider because he is able to generate it on-demand. Further the delay is reduced because the payload-dependent header information is available and can immediately be provided to the terminal such that the payload can be decoded as soon as it becomes available to the terminal, thereby ensuring that the generation, the transmission and possibly also the decoding of the video are done in parallel.

This is especially the case in examples where terminals are configured to receive video in a specific format and order such as first the payload-dependent header information and then the payload. Such a terminal obviously is not able to process the payload as long as the payload-dependent header information is not available. Thus, such a terminal would experience substantial delays if the payload-dependent header information was generated after the payload itself was generated. In other words, by obtaining the payload-dependent header information before generating the payload, various existing terminals will be able to quickly start processing the payload which is generated on-demand.

Optionally in the method for generating a video specific for a terminal and/or user according to the present invention, the step of obtaining payload-dependent header information may comprise generating at least one reference to a location of information suitable for decoding and/or playback of the payload.

Further optionally in the method for generating a video specific for a terminal and/or user according to the present invention, the at least one reference may be determined based on the expected payload length.

Certain video formats and encodings do not require that the information suitable for decoding and/or playback (also called header) of the payload is delivered in front of the payload data. In other words, certain video formats could process a file or stream wherein payload data is found before a header or information for decoding and/or playback is found. However those formats do require some sort of reference to the actual location of the header or the information useable for decoding and/or playback of the video payload. Alternatively or in addition thereto, the header may be divided in several pieces, each piece placed in between successive parts of the payload. In such case, the payload-dependent header information may be generated to contain a reference to the location of the first piece of the header, and wherein each piece of header also contains a reference to the next, in addition to information suitable for decoding and/or playback of a part of the payload.

Such a reference may be an exact location in a situation wherein the length of the payload is well known and thus the exact location of the header or information suitable for decoding and/or playback is known. Alternatively, the reference may be generated based on available information such as the length of the payload for an existing video or other variation of the video that is requested and an estimation of the location can be made. In general, an estimation of the location can be made or the exact location may be known before the payload itself is generated.

An advantage of the foregoing is that existing players which are able to process such a reference can be used and video generation and transmission can be done in parallel. The terminal obtains a reference from the payload-dependent header information and thereafter at least a part of the payload can become available. Based on the reference, the location of the actual header or information suitable for decoding and/or playback is known and thus the payload can be processed once the header is available.

In an example where the payload is divided into several sections, each section may have it's own information for decoding that section. The method allows the delivery of a reference to the header of the first section before the first section is delivered. Once the first section is complete, the exact header for decoding that section may be generated and delivered. This way the delay between requesting a video and playback of at least a part thereof is reduced to the duration of generating the first section. Existing terminals will recognize the payload-dependent header information and the reference therein, then recognize the payload section and finally recognize the header itself which enables the terminals to decode and/or playback that section. Alternatively the payload may be provided in a single piece in which case the delay may be longer. However, the reference is still available so the terminal may recognize the payload-dependent header information and payload as a supported format and the transmission can already start as soon as an estimated reference and the initial bits of the payload have been generated, as compared to the situations today whereby the reference would only be finalized until after the exact location of the header, succeeding the payload, would be known.

Optionally in the method for generating a video specific for a terminal and/or user according to the present invention, the method may further comprise the step of adjusting the payload to the expected payload length.

Further optionally in the method for generating a video specific for a terminal and/or user according to the present invention, the adjusting may comprise one or more of the following:
- stuffing the payload with noise;
- adding data bits to the payload;
- removing data bits from the payload.

It is possible to estimate the length of the payload based on various information such as other versions of the same video, other available videos or known references, etc. However, if the exact length of the payload is unknown and thus estimation is used, it is possible that the actual length of the payload does not correspond to the estimated payload length. Various solutions exist to adjust the payload length to the estimated payload length. A first solution is stuffing the payload with noise. Stuffing noise means that noise or random bits are added after the actual payload data until the actual payload and the noise have a length so that the actual payload length equals the expected payload length. As the header will not refer to these noise bits, the content nor the quality of video as it is played back will be influenced. An alternative could be to add actual video data bits to the payload. During the encoding, it may be possible to detect that the actual payload length will be less than the expected payload length. In such case additional bits may be added to contain more information per frame or picture than initially configured. This way the actual payload length may be increased and additional information or higher quality can be achieved for the video or a part thereof. If however the expected payload length is shorter than the actual payload length, it may be needed to remove data bits from the payload to adjust the payload length. This may reduce the amount of bits containing the video data and thus affect the quality negatively.

In general an actual payload which is shorter than the expected payload length is of no problem. Any information which is contained after the payload such as a header or information for decoding and/or playback is located by the terminal using a reference. However, if the payload length goes beyond the location of the header or information to which the payload-dependent header information points, a part of the video may become inaccessible or may overwrite the header or information for decoding and/or playback. It is therefore beneficial to adjust the length of the payload to the expected payload length.

Optionally in the method for generating a video specific for a terminal and/or user according to the present invention, the step of obtaining payload-dependent header information may comprise selecting previously generated payload-dependent header information.

In an ideal scenario the method has all versions of payload-dependent header information that could be needed available. This means a header for each change in resolution, encoding, audio tracks, bit-rate, etc. or in other words, all headers are available to cover all of the possible terminals and/or users or groups of users. For instance, the header for each version of a video that could be generated may be available in the method of the present invention. The headers are for instance available because some processor has generated the payload in all versions and has generated the headers in downtime. Only the headers are memorized and the payloads are discarded. In such case, the method can select the header or information suitable for decoding the payload from the available headers and there is no need for references to such information. As a consequence, the header is immediately available to the terminal or can be provided to the terminal without a delay due to the generation of the payload. It enables the present invention to provide the terminal with the header and the payload such that decoding may start with no or small delays and without the need of massive storage space to store all possible variants of the payload of each video file. In this scenario, video generation, transmission as well as playback can be done in parallel.

The available payload-dependent header information may also be a reference to a location of the actual header or information suitable for decoding and/or playback of the payload. This may be for instance to obtain an exact reference rather than an estimated reference, as described above. This may be beneficial in a scenario where the exact video contents may change based on the request such as the addition of an advertisement specific for a user. The contents without the advertisement is known and thus the payload length in any variation can also be determined. If all advertisements have the same impact on the eventual payload, for instance because each advertisement is made to be identical in length and payload, the method according to the present invention can produce an exact reference to the header, then the payload with the advertisement included is generated and finally the header adapted to support both the video and the embedded advertisement is generated. However, it is more beneficial to immediately include the actual header or information suitable for decoding and/or playback of the payload preceding the actual payload rather than a reference thereto because the latter increases the delay before the decoding or playback (as transmission needs to be completed before decoding can start) whereas the first enables generally simultaneous generation, transmission and decoding.

Alternatively, the reference may point to a different source of the payload-dependent header information such as an URL on a different computer or server. By having such references stored in advance, the terminal can retrieve that information while obtaining the payload data.

Optionally in the method for generating a video specific for a terminal and/or user according to the present invention, the step of obtaining payload-dependent header information may comprise generating estimated information suitable for decoding and/or playback of the payload.

In addition to, or as an alternative to using a reference to the information suitable for decoding and/or playback of the payload or selecting the information itself, it may be possible to estimate the header or the information suitable for decoding and/or playback of the payload. Such an estimation has to correspond to the actual payload in order to enable decoding thereof.

Certain changes to the payload may however be translated to changes in the information for decoding. For instance a video with a particular content may have a certain resolution and encoding in a first version of that video. The encoding implies a certain bit-rate used for the payload at that particular resolution. If a second version of that video has the same resolution but a different encoding, it is possible to determine how this different encoding changes the bit-rate. For instance, the second encoding may have a bit-rate which is half of the bit-rate of the first encoding. This means that the payload will consist of half the amount of bits in the second version. This also means that the information suitable for decoding and/or playback can be altered based on the knowledge of less bits per frame. Similarly, if the resolution changes, more or less bits are needed to ensure that all the information is transported. Such changes between various versions of the same video can be translated to the header or the information suitable for decoding and/or playback. By altering the header itself to the specificities of the terminal, not all versions of headers need to be available before generating the relevant payload, while playback can still be done in parallel to the transmission of the video, which would be not be possible should the method have used a reference to a header still to be generated after the payload was generated.

Optionally in the method for generating a video specific for terminal and/or user according to the present invention, the step of generating the payload may be based on the estimated information suitable for decoding and/or playback of the payload.

Because the payload itself is generated after obtaining the payload-dependent header information, it is possible to adjust the payload to the estimated information for playback and/or decoding. This way it is possible to ensure that the payload corresponds exactly to the estimated information and to avoid any errors in the estimation or to remove any such errors from the final video, while still creating the header or information suitable for decoding and/or playback before the payload is generated. Adjusting the payload can occur in various ways such as altering the constraints of video encoders which are used for generating the payload, adding or removing bits from the payload to match payload length, bit-rate, etc. The advantage thereof is that the estimated information can be used to decode the payload and allow playback of the payload by the terminal while payload is still being generated.

Optionally in the method for generating a video specific for a terminal and/or user according to the present invention, the payload-dependent header information may comprise one or more of the following:
- information suitable for decoding and/or playback of at least part of the payload;
- a reference to information suitable for decoding and/or playback at least part of the payload; and
- information derived from said information suitable for decoding and/or playback of at least part of the payload and/or derived from said reference.

As described above with reference to various ways of obtaining the payload-dependent header information, the payload-dependent header information can be generally considered as one out of three things. In certain cases, the payload-dependent header information is information that is suitable for decoding and/or playback of the video. Such information is information which informs the terminal or decoder of the specifications of the video, where each frame is located in the payload and in general other information that may be used to enable decoding of the payload and playback of the video. The payload-dependent header information may also be a reference to a location containing such information. For instance a pointer to a location in the payload or a location after the payload which contains the above mentioned information suitable for decoding and/or playback of the payload and which is then sometimes also called a trailer. In general such a pointer or reference provides information to the decoder or terminal where the information that it can use for decoding and/or playback can be found.

The information suitable for decoding and/or playback can be stored in a typical format which is recognized as a header by decoders. However, the actual information therein may be derived from that format and stored separately. The separately stored information may then be used to reconstruct the proper format of the information suitable for decoding and/or playback. For instance, in a certain embodiment the header of a video may look like *resolution: 1280x1024 encoding: MPEG2 audio-track: MP3 bit-rate: 512kbps.* The header or the information would correspond to the entire set including the format and field identifiers. Derived information could for instance be the information without the field identifiers thus *1280x1024, MPEG2*, *MP3, 512kbps.* This information may be stored and obtained before the payload itself is generated. Such derived information enables the generation of an exact header for the payload even before the payload itself is generated. Of course it is possible to perform operations on the information such as encrypted, translation into different data formats, hashing, etc. All of such information may be used as payload-dependent header information and can be processed into a header or information suitable for decoding in the proper format. In addition, references may be derived from available information. For instance a difference in video length between two video's may be translated into a factor by which a reference for the first video can be multiplied to obtain the reference for the second video.

Optionally the method for generating a video specific for a terminal and/or user according to the present invention may further comprise the step of combining at least the payload-dependent header information and at least a part of the payload into a video file.

Video can typically be found in the form of a stream, whereby a continuous flow of video payload exists between a video source and a terminal or as a file which can be processed by the terminal. Although video streams typically also need some sort of payload-dependent header information for ordering the parts of the stream and enabling decoding or playback of the stream, video streams are less prone to the problems of data storage than video files.

The present invention may enable a service provider to offer video files for download or for storage on a data carrier using the method as described above with in addition a step of combining at least the payload-dependent header information and at least a part of the payload into a video file. For instance, if the payload-dependent header information corresponds to the header which contains all the information suitable for playback and/or decoding of the payload, the video file could correspond to the entire payload and header and thus be a complete video file which can be processed stand-alone by a terminal. In other cases, a complete header may be available and be combined with a part of the payload as a first part of the video which can be provided to the terminal. The terminal can then initiate the decoding of that first part or first file while obtaining a second part of the file or a second file. In case the payload-dependent header information contains a reference to a location with information suitable for decoding and/or playback, the video file may consist of that reference, the payload itself and then the information suitable for decoding and/or playback of the payload to which the reference points.

Optionally the method for generating a video specific for a terminal and/or user according to the present invention may further comprise the step of transmitting the payload-dependent header information and the payload to the terminal.

In certain embodiments, the present invention may be used on for instance a web server which offers online video content to users. In such case the terminal can be the personal computer of a visitor of a website. However, a personal computer is typically able to adapt to a large range of applications, encodings and is able to support a wide range of resolutions. This means that there is less need to adapt a video to the specifications of a personal computer, as the computer can itself adapt to the specifications of many video formats. However mobile devices are less flexible in adapting to the video and are therefore a primary goal for the use of the present invention.

The terminal needs to obtain the video before it can initiate the decoding and/or playback of the video. This generally involves the transmission of the payload-dependent header information and the payload to the terminal. Such transmission may occur via any transmission channel or technology. For instance wireless communication such as GSM, GPRS, EDGE, HSDPA or other mobile communication technologies for mobile telephones may be used to provide videos to mobile phones or devices with mobile telephone functionality such as personal digital assistants, laptops with a GSM/GPRS/EDGE/HSDPA/... adapter, etc. Alternatively technologies such as WiFi, WiMax, Bluetooth, etc may be used to deliver the video to a particular terminal. It is however not excluded that also wired communication technologies can be used to provide the video to a terminal. Examples are optical fibre based technologies, copper wire based technologies or through a USB cable.

Optionally in the method for generating a video specific for a terminal and/or user according to the present invention, the step of generating the payload and the step of transmitting may generally be performed simultaneously.

Optionally in the method for generating a video specific for a terminal and/or user according to the present invention, the step of transmission and decoding and/or playback of the payload in the terminal may generally be performed simultaneously.

Because the payload-dependent header information is available before the payload is generated, it is possible to start the transmission of the payload-dependent header information and at least a part of the payload once the generation of the payload has started but even before it is finished; while still offering video that can be decoded by existing terminals supporting the used encoding. This means that generation of the payload and the transmission can generally be performed simultaneously. It is possible that a small delay will exist between obtaining the payload-dependent header information and the transmission because it might be beneficial to at least have a part of the payload already generated. This way the transmission can be started and the transmission buffer or queue can continuously be filled with newly generated payload. If the payload-dependent header information contains the actual information to decode and/or playback at least part of the payload instead of a reference thereto, the generation of the payload, transmission of the payload to the terminal and playback of the terminal may generally also occur simultaneously, should the terminal support this.

If the payload-dependent header information consists of a reference to information for decoding and/or playback, the playback or decoding can only be initiated once that information has been received by the terminal. In such case it is possible to have a simultaneous generation of the payload and transmission. However decoding and/or playback can then only occur once the transmission is complete.

It should be noted that although it is mentioned that certain steps occur simultaneously, this does not mean that they have to start simultaneously as well. Each step may be delayed slightly because some output from a previous step may be required. Transmission may require at least some generation to be completed and playback or decoding may require that at least some transmission is completed.

The present invention further relates to a device for generating a video specific for a terminal and/or user,
the device comprises:
- means for obtaining payload-dependent header information for at least part of the video;
- means for generating a payload of said part of video after obtaining the payload-dependent header information

### Brief Description of the Drawings

Fig. 1 illustrates a time scheme of a prior art solution;
Fig. 2 illustrates an overview of a scenario wherein an embodiment of the present invention can be used;
Fig. 3 illustrates the generation of payload-dependent header information according to an embodiment of the present invention;
Fig. 4 illustrates a time scheme of an embodiment of the present invention in use; and
Fig. 5 illustrates a time scheme of an alternative embodiment of the present invention in use.

### Detailed Description of Embodiment(s)

Fig. 2 illustrates a video on-demand service offered by server 201 to a number of terminals 206 and 208. The server 201 has a communication link with terminal 206 via wireless link 207 and with terminal 208 via wireless communication link 209. Terminals 206 and 208 are two different mobile telephones, for instance each with a different set of supported codecs, a different screen resolution and other supported buffers and communication link capacity. The server 201 is further connected to a central server 203 with a storage medium 204 of the service provider via communication link 205. Finally the server 101 has an internal storage 202 whereon data can be stored.

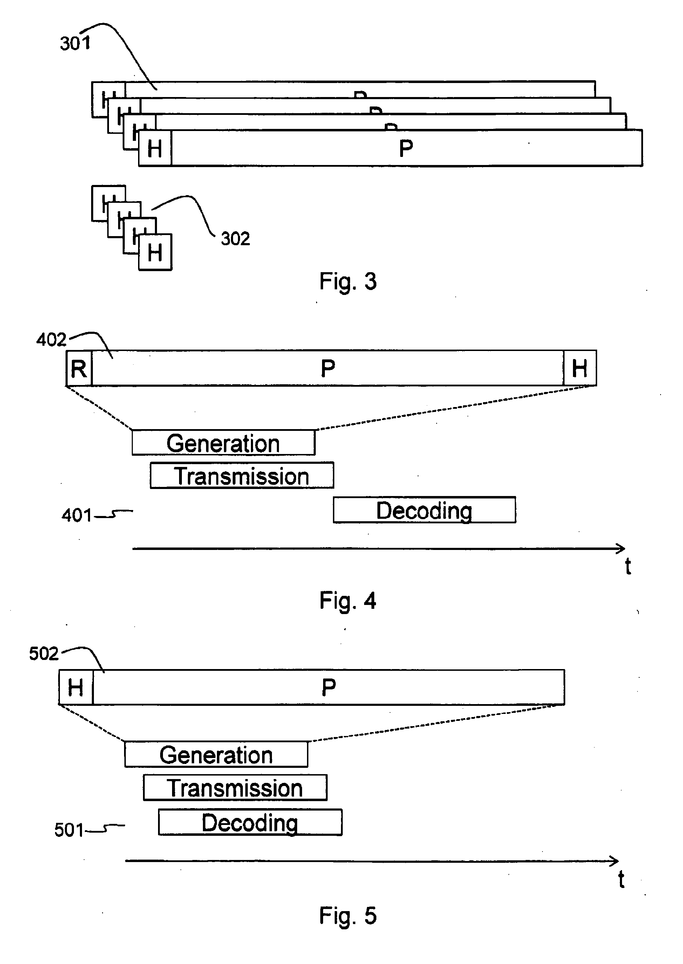

The central server 203 has a high-quality and high-resolution version of each video which is offered through the video on-demand service by server 201. The central server 203 stores these high-quality versions on the storage 204 and the central server can be used to generate various versions of each high-quality video. In particular, the central server 203 is able to generate a version which is perfectly tailored to the specifications of terminal 206 and a different version which is tailored to the specifications of terminal 208. However, instead of generating each version and storing each version in advance, the central server 203 provides the header information for each version to the server 201 via link 205. The server 201 stores each piece of header information in his storage 202. The process performed by central server 203 is illustrated in Fig. 3.

When terminal 206 requests a particular video, the server 201 is able to obtain the payload-dependent header information for that particular video from storage 202 in the format specific for terminal 206. Based on that header information, the server 201 can commence transmitting the payload-dependent header information while still generating the payload of the video requested by terminal 206 based on the high-quality version of the video which is also stored in storage 202. Similarly when terminal 208 requests the same video, the server 201 can obtain the appropriate payload-dependent header information for that video specific for terminal 208, commence its transmission while generating the corresponding payload from the high-quality version stored in storage 202.

However, it is not required to have every possible header stored in memory 202. In order to reduce the storage space required for headers in server 201, it may be possible to only store the headers for the most popular specifications such as those related to the most popular terminals on the storage 202. Versions of the video for which no header is stored in storage 202 need to be generated upon request. In such case, the server 201 can generate a reference to the header or estimate the header itself before the payload is generated.

Fig. 3 illustrates how the central server 201 of Fig. 2 can obtain the various headers for a particular version in all formats. Fig. 3 illustrates four variations of header H and payload P in 301. The headers H contain information which can be used for decoding and/or playback of the payload P. The payload P contains the information which is presented to the user such as the frames or pictures and the audio which make up the video. Fig. 3 shows four variations, however this is not to be considered as limited to four. There may be a larger or smaller number of sets with headers H and payload P generated by the central server 203. Once all the headers H and payload P are generated, the central server may discard all the payloads P and retain the headers H as can be seen in 302. The set of headers H each represent a version of the same video with specifications different for each header H. These headers H can be delivered to the server 201 for storage in memory 202.

Fig. 4 illustrates the use of a reference R which points to the location of header H which in this particular example is located after the payload P as depicted in 402. The payload P is specific for a particular terminal and/or user and the header H contains information suitable for decoding and/or playback of the payload P. The header H may contain additional information which may or may not be involved in the decoding and/or playback process or which may be meta-information providing additional information related to the content of the video.

Fig. 4 illustrates the three parts of the process of providing a video-on-demand service to a terminal over time in diagram 401. The first part is the generation of the payload which is preceded by obtaining the header information which in this example is a pointer to the estimated location of the header itself, based on the estimated length of the payload. The sequence wherein the reference is obtained, the payload is generated and the header is obtained or generated is illustrated in an exploded view of the generation step which is shown in 402. Once the generation is started, it is possible to initiate the transmission of the already generated payload and the reference R. Once the complete payload has been generated, header H becomes available and the header H can also be transmitted to the terminal. Once the payload P and the header H have been received by the terminal, the decoding and/or playback of the video can be initiated and the user can experience the video. Fig. 4 illustrates a generally simultaneous generation of the payload and transmission thereof.

Fig. 5 illustrates the three parts of providing video-on-demand to the terminal over time in diagram 501. The header H depicted in Fig. 5 may be a header which was previously generated, for instance as illustrated with regards to Fig. 3 or may be a header which is estimated based on other information and/or headers prior to the generation of the payload. 502 shows an exploded view of the generation step and illustrates that the header is obtained first and the payload itself is generated thereafter. Because the header itself or an estimated header to which the payload P is adjusted is known a priori, the header can be transmitted to the user as soon as transmission starts. This may be at the same time as the generation of the payload or can be delayed slightly, for instance to fill transmission buffers with sufficient information to avoid transmission interruptions because data transmission would be faster than the payload generation. Thus, generation and transmission can occur generally simultaneously. In addition, because the header is also available at the beginning of the video, the terminal can initiate the decoding process while the transmission and generation is still in progress. Thus, generation, transmission and decoding can generally occur simultaneously as is shown in 501.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A method for generating a video specific for a terminal and/or user,
**characterized in that** said method comprises the steps of:
- obtaining payload-dependent header information for at least part of said video;
- subsequently generating a payload of said part of said video.

2. The method for generating a video specific for a terminal and/or user as defined in claim 1,
**characterized in that** said step of obtaining payload-dependent header information comprises generating at least one reference to a location of information suitable for decoding and/or playback of said payload.

3. The method for generating a video specific for a terminal and/or user as defined in claim 2,
**characterized in that** said at least one reference is determined based on the expected payload length.

4. The method for generating a video specific for a terminal and/or user as defined in claim 3,
**characterized in that** said method further comprises the step of adjusting said payload to said expected payload length.

5. The method for generating a video specific for a terminal and/or user as defined in claim 4,
**characterized in that** said adjusting comprises one or more of the following:
- stuffing said payload with noise;
- adding data bits to said payload;
- removing data bits from said payload.

6. The method for generating a video specific for a terminal and/or user as defined in claim 1,
**characterized in that** said step of obtaining payload-dependent header information comprises selecting a previously generated payload-dependent header information.

7. The method for generating a video specific for a terminal and/or user as defined in claim 1,
**characterized in that** said step of obtaining payload-dependent header information comprises generating estimated information suitable for decoding and/or playback of said payload.

8. The method for generating a video specific for terminal and/or user as defined in claim 7,
**characterized in that** said step of generating said payload is based on said estimated information suitable for decoding and/or playback of said payload.

9. The method for generating a video specific for a terminal and/or user as defined in claim 1,
**characterized in that** said payload-dependent header information comprises one or more of the following:
- information suitable for decoding and/or playback of said payload; and
- a reference to information suitable for decoding and/or playback of said payload; and
- information derived from said information suitable for decoding and/or playback of at least part of the payload and/or derived from said reference.

10. The method for generating a video specific for a terminal and/or user as defined in claim 1,
**characterized in that** said method further comprises the step of combining at least said payload-dependent header information and at least a part of said payload into a video file.

11. The method for generating a video specific for a terminal and/or user as defined in claim 1,
**characterized in that** said method further comprises the step of transmitting said payload-dependent header information and said payload to said terminal.

12. The method for generating a video specific for a terminal and/or user as defined in claim 11,
**characterized in that** said step of generating said payload and said step of transmitting are generally performed simultaneously.

13. The method for generating a video specific for a terminal and/or user as defined in claim 11,
**characterized in that** said step of transmitting and decoding and/or playback of said payload in said terminal are generally performed simultaneously.

14. A device for generating a video specific for a terminal and/or user,
**characterized in that** said device comprises:
- means for obtaining payload-dependent header information for at least a part of said video;
- means for generating a payload of said part of said video after obtaining said payload-dependent header information.

## Amended claims

### Amended claims in accordance with Rule 137(2) EPC.

**1.** A method for generating a video (301; 402; 502), said method comprising:
- obtaining payload-dependent header information (H) for at least part of said video;
**characterized in that** said video (301; 402; 502) is generated specific for a terminal and/or user (206, 208), and **in that** said method comprises the steps of:
- subsequent to obtaining said payload-dependent header information (H), generating a payload (P) of said part of said video.

**2.** The method for generating a video (301; 402; 502) specific for a terminal and/or user (206, 208) as defined in claim 1,
**characterized in that** said step of obtaining payload-dependent header information (H) comprises generating at least one reference (R) to a location within said video (301; 402; 502) where information (H) used for successful decoding and/or playback of said payload (P) is contained.

**3.** The method for generating a video (301; 402; 502) specific for a terminal and/or user (206, 208) as defined in claim 2,
**characterized in that** said at least one reference (R) is determined based on the expected payload length.

**4.** The method for generating a video (301; 402; 502) specific for a terminal and/or user (206, 208) as defined in claim 3,
**characterized in that** said method further comprises the step of adjusting said payload (P) to said expected payload length.

**5.** The method for generating a video (301; 402; 502) specific for a terminal and/or user (206, 208) as defined in claim 4,
**characterized in that** said adjusting comprises one or more of the following:
- stuffing said payload (P) with noise;
- adding data bits to said payload (P);
- removing data bits from said payload (P).

**6.** The method for generating a video (301; 402; 502) specific for a terminal and/or user (206, 208) as defined in claim 1,
**characterized in that** said step of obtaining payload-dependent header information (H) comprises selecting a previously generated payload-dependent header information.

**7.** The method for generating a video (301; 402; 502) specific for a terminal and/or user (206, 208) as defined in claim 1,
**characterized in that** said step of obtaining payload-dependent header information (H) comprises generating estimated information used for successfully decoding and/or playback of said payload (P), said estimated information being generated based on a previously generated header known prior to generation of said payload (P).

**8.** The method for generating a video (301; 402; 502) specific for a terminal and/or user (206, 208) as defined in claim 7,
**characterized in that** said step of generating said payload (P) is based on said estimated information used for successful decoding and/or playback of said payload (P).

**9.** The method for generating a video (301; 402; 502) specific for a terminal and/or user (206, 208) as defined in claim 1,
**characterized in that** said payload-dependent header information (H) comprises one or more of the following:
- information used for successful decoding and/or playback of said payload (P); and
- a reference (R) to information (H) used for successful decoding and/or playback of said payload; and
- information derived from said information (H) used for successful decoding and/or playback of at least part of the payload (P) and/or information derived from said reference (R).

**10.** The method for generating a video (301; 402; 502) specific for a terminal and/or user (206, 208) as defined in claim 1,
**characterized in that** said method further comprises the step of combining at least said payload-dependent header information (H) and at least a part of said payload (P) into a video file.

**11.** The method for generating a video (301; 402; 502) specific for a terminal and/or user (206, 208) as defined in claim 1,
**characterized in that** said method further comprises the step of transmitting said payload-dependent header information (H) and said payload (P) to said terminal(206, 208).

**12.** The method for generating a video (301; 402; 502) specific for a terminal and/or user (206, 208) as defined in claim 11,
**characterized in that** said step of generating said payload (P) and said step of transmitting are performed simultaneously apart possibly from a small delay.

**13.** The method for generating a video (301; 402; 502) specific for a terminal and/or user (206, 208) as defined in claim 11,
**characterized in that** said step of transmitting and decoding and/or playback of said payload (P) in said terminal (206, 208) are performed simultaneously apart possibly from a small delay.

**14.** A device for generating a video (301; 402; 502), said device comprising:
- means for obtaining payload-dependent header information (H) for at least a part of said video;
**characterized in that** said video (301; 402; 502) is terminal and/or user specific, and said device comprises:
- means for generating a payload (P) of said part of said video after obtaining said payload-dependent header information (H).
